# EUROPEAN PATENT SPECIFICATION

(11) **EP 0 459 743 B1**
(45) Date of publication and mention of the grant of the patent: **08.01.1997**
(21) Application number: 91304787.4
(22) Date of filing: 28.05.1991
(51) Int. Cl.: G11B 23/03

(54) **Disc cartridges and methods of manufacturing such cartridges**
Plattenkassette und Verfahren zur Herstellung einer solchen Kassette
Cassettes à disques et procédé de fabrication de telles cassettes

(30) Priority: 31.05.1990 JP 142532/90
(43) Date of publication of application: 04.12.1991
(73) Proprietor: SONY CORPORATION, Tokyo 141 (JP)
(72) Inventor: Funawatari, Takatsugu, c/o Patent Division,, Shinagawa-ku Tokyo (JP); Takahasi, Kenji, c/o Patent Division,, Shinagawa-ku Tokyo (JP)
(74) Representative: Cotter, Ivan John

(56) References cited:
- EP-A- 0 160 538
- EP-A- 0 236 100
- EP-A- 0 339 651

## Description

This invention relates to disc cartridges and to methods of manufacturing such cartridges.

There have recently been put into use various high density storage discs, such as optical discs and magneto-optical discs. The discs are typically housed in disc cartridges made of resin, so that the recording surfaces of the discs are protected from dust and damage. In use, a disc cartridge with a disc therein is loaded into a disc drive.

The disc cartridge has an opening defined in one or both of upper and lower walls. When the disc cartridge is loaded in the disc drive, an optical head accesses the disc through the opening. The disc cartridge also has a shutter for closing the opening, so as to prevent dust or other foreign matter from entering the disc cartridge through the opening when the disc is not in use.

More specifically, when the disc is not in use, the shutter closes the opening, thereby sealing the interior of the cartridge. When the disc cartridge is inserted into the disc drive, the shutter is slid open by a shutter opening mechanism in the disc drive, so that the disc is exposed through the opening.

The disc cartridge is typically made of plastics material such as ABS resin or polycarbonate resin, and the shutter is made of sheet metal such as stainless steel or aluminium. As the disc cartridge is used, it is gradually worn by abrasive frictional movement of the shutter thereagainst. The particles produced from the disc cartridge by the abrasion tend to make the shutter sluggish in its sliding movement, and may become attached to the recording surface of the disc, sometimes resulting in a signal read-out error. If the disc cartridge has deformations, even if they are relatively small, they may contact the shutter as it is opened and closed, requiring the user to exert relatively large forces to open and close the shutter, and eventually preventing the shutter from being opened and closed. Such deformations may also cause noise to be produced when the shutter slides against the disc cartridge.

Patent Specification EP-A-0 339 651 discloses a disc cartridge with a shutter formed of a sheet metal cover screwed to a plastics slider and further discloses that to avoid damage to or flaws on the surfaces of the shutter or to preserve printing thereon, such shutters may be dipped in an ultraviolet curing resin to form a coating thereon.

According to one aspect of the present invention there is provided a disc cartridge comprising:
a cartridge body with a disc rotatably housed therein, the cartridge body having an opening defined in at least one wall thereof;
a shutter slidably mounted on the cartridge body, for opening and closing the opening; and
sliding means on a surface of the shutter which makes sliding contact with the cartridge body upon opening and closing of the shutter, the sliding means comprising a thin film of a material;
characterised in that the thin film is applied in the form of a plurality of circular, rectangular, or otherwise shaped small dots or spots of a material having a small coefficient of friction.

The sliding means allows the shutter to slide well against the cartridge casing, without abrading the cartridge casing. Even if the cartridge body has slight deformations or distortions, the shutter can make smooth opening and closing movements with respect to the cartridge body, and does not produce noise upon sliding movement against the cartridge body.

According to another aspect of the present invention there is provided a method of manufacturing a disc cartridge having a cartridge body with a disc rotatably-housed therein, the cartridge body having an opening defined in at least one wall thereof, and a shutter slidably mounted on the cartridge body, for opening and closing said opening, the method comprising the steps of:
blanking a blank sheet in the form of an unfolded configuration of the shutter, out of a sheet metal material;
bending the blank sheet to form the shutter; and
prior to the bending operation, applying a thin film of a material to a surface of the blank sheet which, after bending and in use of the disc cartridge, will make sliding contact with the cartridge body during opening and closing movement of the shutter;
characterised in that the thin film is applied in the form of a plurality of circular, rectangular, or otherwise shaped small dots or spots of a material having a small coefficient of friction.

The invention will now be described by way of example with reference to the accompanying drawings, throughout which like parts are referred to by like references, and in which:
Figure 1 is an exploded perspective view of an embodiment of disc cartridge according to the present invention;
Figure 2 is an enlarged fragmentary cross-sectional view of a shutter for the disc cartridge of Figure 1;
Figure 3 is a perspective view of the disc cartridge of Figure 1, as viewed from below; and

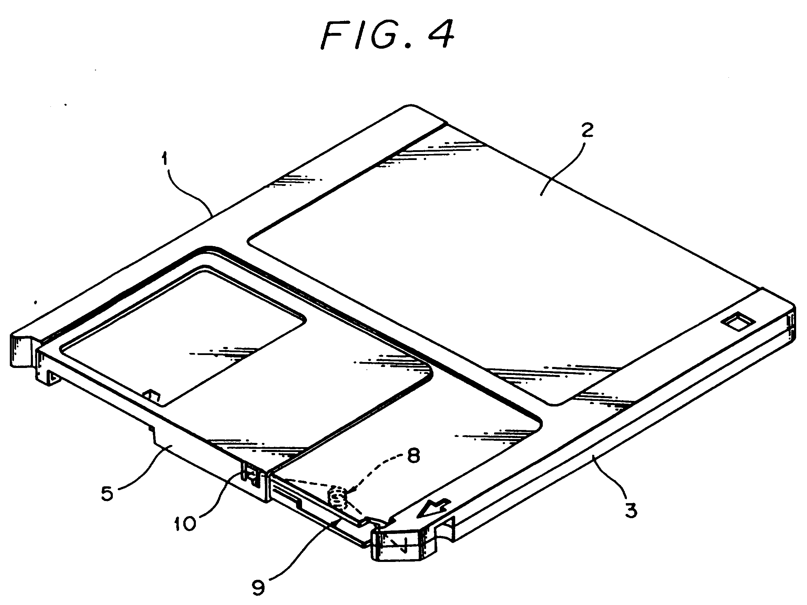

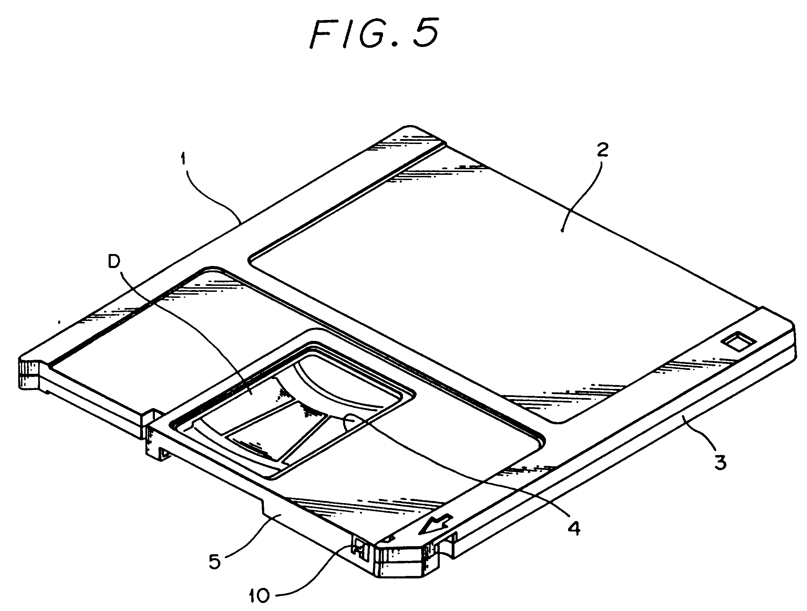

Figures 4 and 5 are perspective views of the disc cartridge of Figure 1 with a shutter closed and open, respectively.

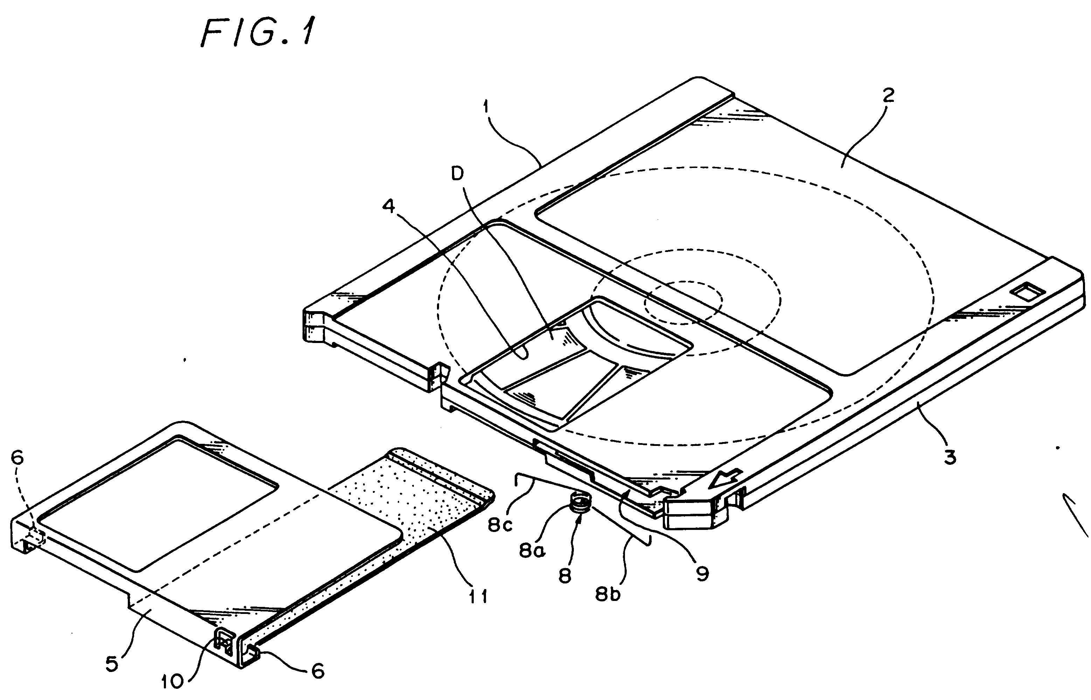

As shown in Figure 1, a disc cartridge has a cartridge body 1 which comprises an upper half 2 and a lower half 3 which are joined together, the upper and lower halves 2 and 3 being made of a plastics material such as ABS resin or polycarbonate resin. The disc cartridge houses a magneto-optical disc D rotatably therein.

Each of the upper and lower halves 2 and 3 has an opening 4 through which the disc D is exposed. When the disc cartridge is loaded into a disc drive (not shown), an optical head, a magnetic head, or the like in the disc drive faces the disc D through the opening 4.

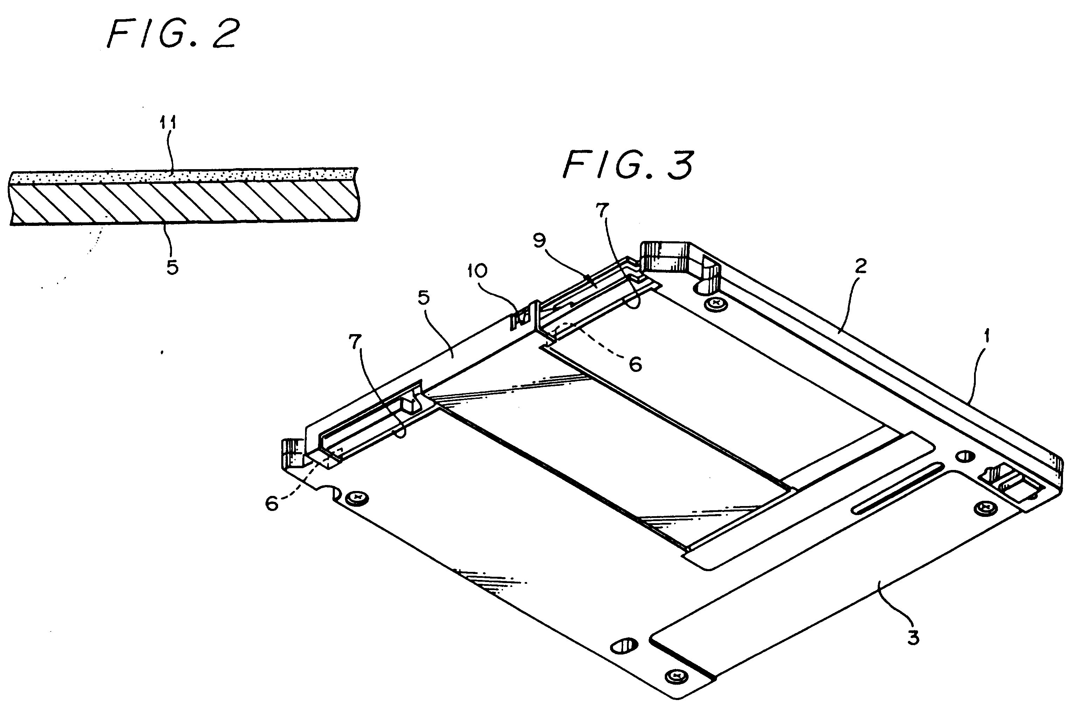

The disc cartridge includes a shutter 5 slidably mounted on the cartridge body 1 for opening and closing the opening 4. The shutter 5 is made of a bent sheet metal material such as stainless steel or aluminium, and has a channel-shaped cross-section so as to extend along upper and lower surfaces of the cartridge body 1. The shutter 5 has a pair of spaced guide fingers 6 engaging in respective guide grooves 7 defined in the lower half 3 of the cartridge body 1, as shown in Figure 3. The shutter 5 is slidably held on the cartridge body 1 by the guide fingers 6 and the guide grooves 7.

The shutter 5 is normally urged in the direction to close the opening 4 by a torsion spring 8. The torsion spring 8 has a central coiled portion 8a and two arms 8b and 8c extending in opposite directions from the central coiled portion 8a. The torsion spring 8 is disposed in a spring housing recess 9 defined in the cartridge body 1 and opening at a front edge thereof. The arm 8b of the torsion spring 8 has a bent distal end engaging in a spring retainer in the cartridge body 1, and the arm 8c has a bent distal end engaging a tongue 10 raised rearwardly from a front face of the shutter 5. The shutter 5 is normally urged to close the opening 4 by forces which are imposed by the arms 8b and 8c tending to spread apart.

When the disc cartridge is not in use, the shutter 5 closes the opening 4 under the bias of the torsion spring 8, fully sealing the interior of the cartridge body 1. When the disc cartridge is loaded into the disc drive, the shutter 5 is slid open by a shutter opening mechanism in the disc drive against the resiliency of the torsion spring 8, thereby exposing the disc D through the opening 4.

The inner surface of the shutter 5, that is, the surface thereof which is held in sliding contact with the cartridge body 1, is coated with a thin film 11 of a material which has a small coefficient of friction, as shown in Figure 2, the thin film 11 being applied in the form of a plurality of circular, rectangular, or otherwise shaped small dots or spots on the inner surface of the shutter 5 to ensure smooth sliding movement of the shutter 5.

The material which has a small coefficient of friction may be acrylic resin, Teflon, nylon, Delrin, or the like. The material is coated on the sheet metal material before it is bent to form the shutter 5.

The shutter is manufactured as follows: a blank sheet in the form of an unfolded configuration of the shutter 5 is blanked out of a sheet metal material such as stainless steel or aluminium. The blank sheet is coated, on its surface which will be an inner surface when assembled on the cartridge body 1 and hence held in sliding contact with the cartridge body 1, with the thin film 11 of a material, as described above, which has a small coefficient of friction. Then, the guide fingers 6 and the tongue 10 are bent from the coated blank sheet, which is thereafter bent over in its entirety into the channel-shaped configuration of the shutter 5.

The thin film 11 of the material having a small coefficient of friction on the inner surface of the shutter 5 allows the shutter 5 to slide well against the cartridge body 1. Even when the shutter 5 is repeatedly slid to open and close the opening 4 over a long period of time, therefore, the cartridge body 1 is prevented from being abraded by the shutter 5. Consequently, the shutter 5 makes smooth sliding movements which would otherwise be hampered by particles produced from the cartridge body 1 by abrasive frictional engagement with the shutter 5, and signals can be read from the disc D without signal read-out errors which would otherwise be caused by such particles becoming attached to the recording surface of the disc D.

Even if the cartridge body 1 has deformations or distortions, since the shutter 5 presents small frictional resistance to the cartridge body 1, the shutter 5 can slide smoothly with respect to the cartridge body 1 and minimize any noise when the shutter 5 opens and closes the opening 4.

In the illustrated embodiment, the thin film 11 is fully coated, ie coated over the entire inner surface of the shutter 5. However, the thin film 11 may be coated only on a portion of the inner surface of the shutter 5, for example, a peripheral edge of the inner surface thereof, because the peripheral edge tends to be burred or distorted when the shutter blank sheet is blanked out of a sheet metal material and the burrs or distortions would be liable to damage the cartridge body 1 upon sliding movement of the shutter 5.

Since the surface of the shutter 5 held in sliding contact with the cartridge body 1 is coated with the thin film 11 of a material having a small coefficient of friction, the shutter 5 slides well against the cartridge body 1, and does not abrade the cartridge body 1. Even if the cartridge body 1 has slight deformations of distortions, the shutter 5 can move smoothly with respect to the cartridge body, and does not produce noise.

## Claims

1. A disc cartridge comprising:
a cartridge body (1) with a disc (D) rotatably housed therein, the cartridge body having an opening (4) defined in at least one wall thereof;
a shutter (5) slidably mounted on the cartridge body (1), for opening and closing the opening (4); and
sliding means (11) on a surface of the shutter (5) which makes sliding contact with the cartridge body (1) upon opening and closing of the shutter (4), the sliding means (11) comprising a thin film (11) of a material;
characterised in that the thin film (11) is applied in the form of a plurality of circular, rectangular, or otherwise shaped small dots or spots of a material having a small coefficient of friction.

2. A method of manufacturing a disc cartridge having a cartridge body (1) with a disc (D) rotatably-housed therein, the cartridge body (1) having an opening (4) defined in at least one wall thereof, and a shutter (5) slidably mounted on the cartridge body (1), for opening and closing said opening (4), the method comprising the steps of:
blanking a blank sheet in the form of an unfolded configuration of the shutter (5), out of a sheet metal material;
bending the blank sheet to form the shutter (5); and
prior to the bending operation, applying a thin film (11) of a material to a surface of the blank sheet which, after bending and in use of the disc cartridge, will make sliding contact with the cartridge body (1) during opening and closing movement of the shutter (5);
characterised in that the thin film (11) is applied in the form of a plurality of circular, rectangular, or otherwise shaped small dots or spots of a material having a small coefficient of friction.

## Patentansprüche

1. Plattenkasette aufweisend:
ein Kasettengehäuse (1) mit einer drehbar darin enthaltenen Platte (D), wobei das Kasettengehäuse eine Öffnung (4) aufweist, die wenigstens in einer Wand des Kasettengehäuses (1) definiert ist;
einen verschiebbar am Kasettengehäuse (1) befestigten Verschluß (5) zum Öffnen und Schließen der Öffnung (4);und
eine Gleiteinrichtung (11) auf einer Oberfläche des Verschlusses (5), welche beim Öffnen und Schließen des Verschlusses (5) einen Gleitkontakt mit dem Kasettengehäuse (1) herstellt, wobei die Gleiteinrichtung (11) eine dünne Schicht (11) eines Materials enthält;
**dadurch gekennzeichnet, daß** die dünne Schicht (11) in Form von mehreren kreisförmig, rechteckig oder anders geformten kleinen Punkten aus einem Material mit geringem Reibungskoeffizienten ausgebildet ist.

2. Verfahren zur Herstellung einer Plattenkasette aufweisend ein Kasettengehäuse (1) mit einer drehbar darin enthaltenen Platte (D), wobei das Kasettengehäuse (1) eine Öffnung (4) aufweist, die wenigstens in einer Wand des Kasettengehäuses definiert ist, und mit einem verschiebbar am Kasettengehäuse (1) befestigten Verschluß (5) zum Öffnen und Schließen der Öffnung (4), wobei das Verfahren die Schritte aufweist:
Ausstanzen einer Zuschnitt-Platte in die Form einer entfalteten Konfiguration des Verschlusses (5) aus einem Metallblechmaterial;
Verbiegen der Zuschnitt-Platte, so daß diese den Verschluß (5) bildet; und
Ausbildung einer dünnen Schicht (11) eines Materials auf die Oberfläche der Zuschnitt-Platte vor dem Biegevorgang, die nach der Verbiegung und bei Verwendung der Plattenkasette einen Gleitkontakt mit dem Kasettengehäuse (1) bei der Öffnungs- und Schließbewegung des Verschlusses (5) herstellt;
**dadurch gekennzeichnet, daß** die dünne Schicht (11) in Form von mehreren kreisförmig, rechteckig oder anders geformten kleinen Punkten aus einem Material mit geringem Reibungskoeffizienten ausgebildet wird.

## Revendications

1. Cassette à disque comportant:
un corps de cassette (1) avec un disque (D) qui y est logé avec liberté de rotation, le corps de cassette ayant une ouverture (4) définie dans au moins l'une de ses parois;
un volet (5) monté, avec liberté de coulissement, sur le corps de cassette (1), pour ouvrir et obturer l'ouverture (4); et
des moyens de coulissement (11), sur une surface du volet (5), qui font contact coulissant avec le corps de cassette (1) lors de l'ouverture et de la fermeture du volet (4), les moyens de coulissement comportant un fin film (11) de matériau;
caractérisé par le fait que le fin film (11) est appliqué sous forme d'une pluralité de petits points ou de petites taches circulaires, rectangulaires ou d'autres formes, d'un matériau ayant un faible coefficient de frottement.

2. Procédé de fabrication d'une cassette à disque ayant un corps de cassette (1) avec un disque (D) qui y est logé avec liberté de rotation, le corps de cassette (1) ayant une ouverture (4) définie dans au moins l'une de ses parois; et un volet (5) monté, avec liberté de coulissement, sur le corps de cassette (1), pour ouvrir et obturer ladite ouverture (4), le procédé comportant les étapes consistant à:
découper, dans un matériau métallique en feuille, un flan sous forme d'une configuration, non pliée, du volet (5);
plier le flanc pour former le volet (5); et
avant l'opération de pliage, appliquer, sur une surface du flanc, un fin film (11) d'un matériau qui, après pliage et, lorsque la cassette à disque est en service, fera contact coulissant avec le corps de cassette (1) au cours du mouvement d'ouverture et de fermeture du volet (5);
caractérisé par le fait que le fin film (11) est appliqué sous forme d'une pluralité de petits points ou de petites taches circulaires, rectangulaires ou d'autres formes, d'un matériau ayant un faible coefficient de frottement.
